# EUROPEAN PATENT APPLICATION

(11) **EP 1 557 988 A1**
(43) Date of publication of application: **27.07.2005**
(21) Application number: 04290189.2
(22) Date of filing: 23.01.2004
(51) Int. Cl.: H04L 12/58, G06F 9/44, H04Q 7/22

(54) **Method and device for wireless messaging**

(71) Applicant: Motorola, Inc., Schamburg, Illinois 60196 (US)
(72) Inventor: Abdesselem, Ouelid, 31000 Toulouse (FR); Pince, Julien, 31500 Toulouse (FR); Gasparini, Stéphane, 31170 Tournefeuille (FR)
(74) Representative: Cross, Rupert Edward Blount

(57) **Abstract**

A method of remote control of a wireless communication unit (300) operating in a communication network (100) comprising the following steps creating a message (202) to be delivered to said wireless communication unit (300) by a Content Provider (104); creating at least one instruction (204) for said wireless communication unit (300) by said Content Provider (104); delivering said message and said instruction to said wireless communication unit (300); processing (222) said instruction by said wireless communication unit.

## Description

### Field of the Invention

The present invention relates to control of wireless communication units, in general, and in particular, to a method and an apparatus for optimizing use of Multimedia Message Services.

### Background of the Invention

Wireless communications systems, for example a cellular telephony, allow for communication between users of the wireless communication units by means of message services. Besides communication between two users (or a group of users) of the mobile communication units there is a huge number of messages transmitted by third parties, like Value Added Service Providers (VASP) also known as Content Providers, to the users. Big part of these messages is a result of automatic delivery of recurring information (i.e. subscribed billing info, stock market info, weather info etc). With increasing usage of messaging capabilities, the wireless communication unit provides more and more information but also becomes overwhelmed with these recurrently received messages.

Mobile phones are now not only devices that allow for communication with the other party, they also perform many other functions. They can be used for taking photographs, sending and receiving emails, browsing the internet, they can also be used as a personal assistants, etc. It is simply a consequence of the fact that the mobile phones are actually computers and they perform functions similar to those of the traditional computers (PC or laptops). As the elements of a Man Machine Interface (MMI) are software defineable they can be changed and allow for personalization of the mobile phone. However plurality of elements of the MMI makes the process of personalization time consuming. Having computer readable files defining appearance of the elements of the MMI it is difficult to apply proper rendering schemes (e.g. when and for what time the image/animation/text should be displayed on the screen, the sound, if any, should be played immediately or not, etc.).

Computer readable files forming so called themes can be used for personalization of the mobile phone. A theme is a combination of a wallpaper, a screensaver, ring tones. The next step in personalization of the communication device is called "skin". The term "skin" is wider than "theme" as it allows for customization of all aspects of the MMI appearance. In addition to the elements of the MMI that can be personalized by means of the themes skins additionally allow for alteration of elements like icons, toolbars, pointers, etc.

In both these applications interaction of a user of the communication unit is required in order to make the communication unit fully functional. In case of the recurring messages a user of the mobile phone must erase the unwanted messages from the memory. As there could be hundreds of messages in the memory of the phone it could be really time consuming process to find and erase obsolete messages. As the communication units provide more and more functions and become more and more popular it is important to have all the functionalities easily accessible for the user irrespective of the user's technical knowledge and experience.

### Summary of the Invention

There is a need for a method of control of a wireless communication unit and a wireless communication unit, which alleviate or overcome the disadvantages of the prior art.

According to a first aspect of the present invention there is provided a method of control of a wireless communication unit as claimed in claim 1.

According to a second aspect of the present invention there is provided a wireless communication unit as claimed in claim 23.

According to a third aspect of the present invention there is provided a wireless communication system as claimed in claim 35.

The present invention beneficially allows for:
- increasing an Average Revenue Per User (ARPU);
- improving accessibility of multimedia services;
- improving the user's experience;
- terminal/server memory optimization.

### Brief description of the drawings

The present invention will be understood and appreciated more fully from the following detailed description taken in conjunction with the drawings in which:
FIG. 1 is a diagram illustrating a communication network in one embodiment of the present invention,
FIG. 2 is a flow chart illustrating a method of control of a wireless communication unit in one embodiment of the present invention,
FIG. 3 is a block diagram illustrating a wireless communication unit in one embodiment of the present invention.

### Description of an embodiment of the invention

The term "Content Provider" herein below refers to an entity that provides services (mostly information and entertainment) to users of wireless communication devices (e.g. mobile phones) operating in a communications network.

The term "theme" herein below refers to main elements of a Man Machine Interface (MMI) and it could be a combination of a wallpaper, a screensaver, ring tones.

The term "skin" herein below refers to all elements of the MMI that can be personalized. This includes the elements covered by the term "theme" and additionally icons, toolbars, pointers, etc.

The term "stream of a message" (also referred to as a "stream") herein below refers to a parameter that allows for identification of a Content Provider that originated the message and for identification of a content of the message (weather forecast, stock info, news, theme, skin, etc.).

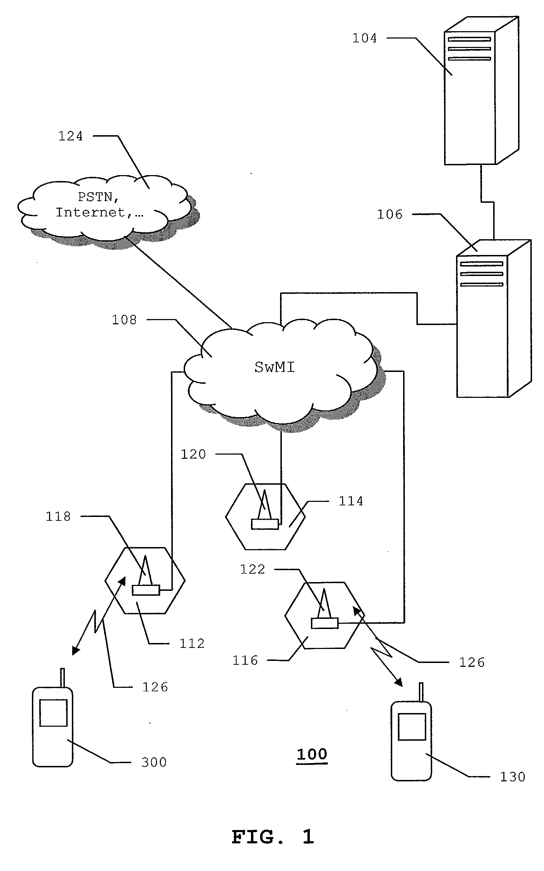

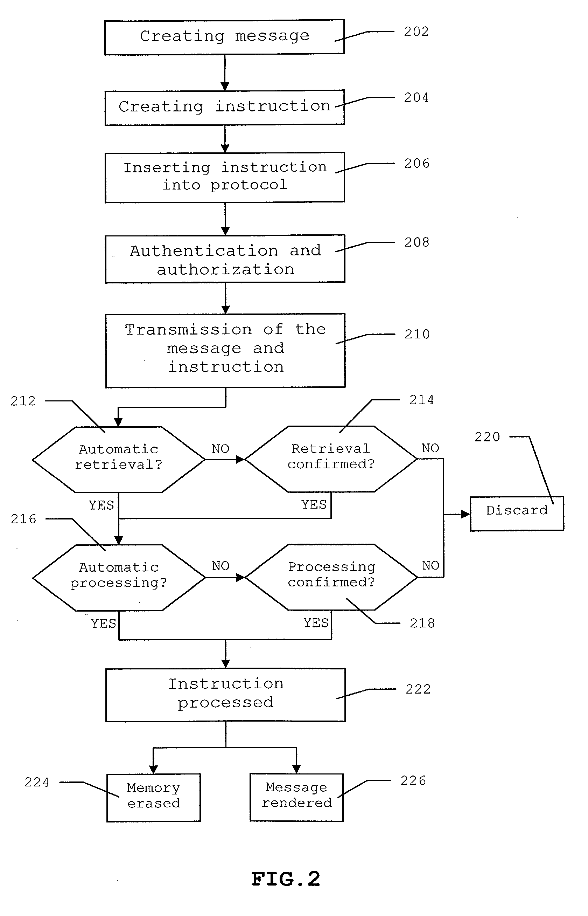

Referring to FIG. 1 and FIG. 2 one embodiment of a method of control of a wireless communication unit 300 (e.g. a mobile phone) according to the present invention is shown. In this embodiment a user of a wireless communication unit 300 operating in a digital communication network 100 subscribes a service that provides regular updates of information on a particular subject (e.g. a weather channel to know the forecast for a given city, location, country, etc). The updates are regularly provided by a Content Provider 104. In a first step the Content Provider 104 creates the MMS message 202 to be delivered to said wireless communication unit 300. The MMS created by the Content Provider 104 in one embodiment may contain a Synchronized Multimedia Integration Language (SMIL) element with both an information text and an image (it can be for example an animated image, e.g. a weather map). In the next step the Content Provider creates an instruction 204 for the wireless communication unit 300. Said instruction defines a stream of a message and an action to be executed by the communication unit 300. As receiving regular updates of some specific information will eventually fill up the whole available memory 312 said instruction instructs the communication unit 300 to erase from the memory 312 all previous messages from the same stream.

In one embodiment the instruction is inserted in two predefined fields, wherein these two fields are added to the standard protocol used for transmitting MMS messages. In a first field the stream of the message is defined and a second field defines the action. Table 1 below specifies information elements in the MM1_submit_REQ message which is part of the protocol used for transmitting MMS messages as defined in 3GPP 23.140 document. The MMS message will be conveyed end-to-end with the two new fields as all concerned interfaces (i.e. MM1_notification.REQ; MM1_retrieve.RES; MM4_forward.REQ; MM7_forward.REQ as defined in 3GPP 23.140) support these new fields and parameters contained therein.

**Table 1:**

| Information elements in the MM1_submit.REQ. | | |
|---|---|---|
| Information element | Presence | Description |
| Message Type | Mandatory | Identifies this message as MM1 submit.REQ |
| Transaction ID | Mandatory | The identification of the MM1 submit.REQ/MM1 submit.RES pair. |
| MMS Version | Mandatory | Identifies the version of the interface supported by the MMS UA. |
| Recipient address | Mandatory | The address of the recipient(s) of the MM. Multiple addresses are possible. |
| Content type | Mandatory | The content type of the MM's content. |
| Sender address | Optional | The address of the MM originator. |
| Message class | Optional | The class of the MM (e.g., personal, advertisement, information service) |
| Date and time | Optional | The time and date of the submission of the MM (time stamp). |
| Time of Expiry | Optional | The desired time of expiry for the MM or reply-MM (time stamp). |
| Earliest delivery time | Optional | The earliest desired time of delivery of the MM to the recipient (time stamp). |
| Delivery report | Optional | A request for delivery report. |
| Reply-Charging | Optional | A request for reply-charging. |
| Reply-Deadline | Optional | In case of reply-charging the latest time of submission of replies granted to the recipient(s) (time stamp). |
| Reply-Charging-Size | Optional | In case of reply-charging the maximum size for reply-MM(s) granted to the recipient(s). |
| Priority | Optional | The priority (importance) of the message. |
| Sender visibility | Optional | A request to show or hide the sender's identity when the message is delivered to the recipient. |
| Store | Optional | A request to store a copy of the MM into the user's MMBox, in addition to the normal delivery of the MM. |
| MM State | Optional | The value to set in the MM State information element of the stored MM, if Store is present. |
| MM Flags | Optional | One or more MM Flag keywords to set in the MM Flags information element of the stored MM, if Store is present |
| Read reply | Optional | A request for read reply report. |
| Subject | Optional | The title of the whole multimedia message. |
| Reply-Charging ID | Optional | In case of reply-charging when the reply-MM is submitted within the MM1_submit.REQ this is the identification of the original MM that is replied to. |
| **Push stream** | **Optional** | **For a given sender, this field indicates at which stream the message pertain** |
| **Push action type** | **Optional** | **It indicates the recommended actions to be taken by the receiving device** |
| Content | Optional | The content of the multimedia message |

However it is within contemplation of the present invention that the instruction (or part of it, e.g. defining the stream of the message) can be inserted into or derived from other fields of the protocol.

Alternatively the instruction may be embedded in the message itself. In one embodiment for embedding the message a Multipurpose Internet Mail Extension (MIME) method is used.

In yet another embodiment the instruction identifying the stream of the message and the action to be executed by the communication unit 300 can be embedded as a plain text in a textual portion of the message. In this embodiment a special markers indicating the beginning and the end of said instruction must be used.

Since the instruction is designed to control the communication unit an adequate safety measures must be employed to ensure that only these parties that the user of the communication device 300 authorized (e.g. by subscribing the service) are allowed to deliver the message to the user's communication unit 300. Authentication and authorization procedures 208 are applied in order to ensure safety of the service. For this purpose one of the methods of authentication and authorization known in the art may be used.

Once the message and the instruction are created the Content Provider 104 transmits them through the operator server 106 and Switching and Management Infrastructure (SwMI) 108, 118, 120, 122, which substantially contains all of the communication elements apart from the communication unit 300. This includes base transceiver stations (BTSs) 118, 120, 122 connected to a conventional public-switched telephone network (PSTN) through base station controllers (BSCs), mobile switching centres (MSCs) and Multimedia Message Service Center (MMSC). For the sake of clarity only part of these element were presented on Fig. 1. Each of the BTSs 118, 120, 122 provides an over-the-air communication 126 with communication units 300, 130 operating in respective cells 112, 114, 116. The SwMI 108, 118, 120, 122 delivers the MMS to the communication unit 300.

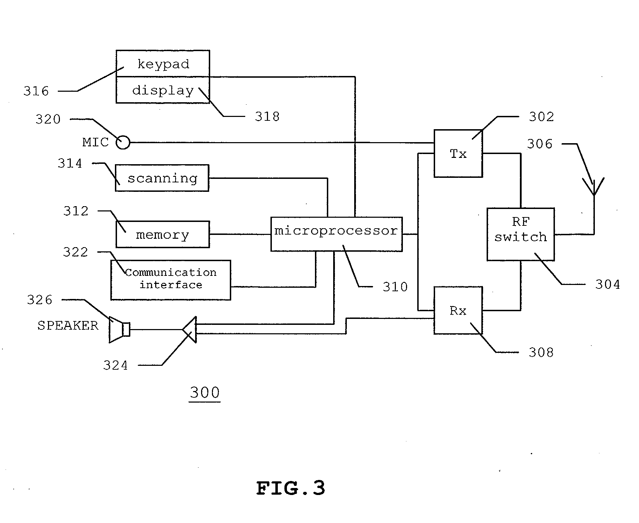

After receiving said MMS message the communication unit 300 extracts the instruction from the predefined information fields and starts processing 222 said instruction. Alternatively, referring to Fig. 3, a scanning function 314 (may be implemented as a part of a microprocessor 310 or as a separate unit) scans the message for the presence of said instruction. Once the instruction is identified it is then transferred to the microprocessor 310 for processing 222.

In one embodiment the MMS message is automatically retrieved 212 by the communication unit and then the instruction is automatically processed 216, 222. In this implementation no user's interaction is required. However to allow the user to keep control over the communication unit 300 it is also possible that the user is prompted (e.g. by a ring alert) to retrieve the message 212, 214 and the instruction is then processed automatically 216, 222 or after the user's confirmation 216, 218, 222. In yet another embodiment the message is retrieved automatically 212 and then the instruction is processed after confirmation by the user 216, 218, 222.

The information placed in a field "date and time" (as shown in Table 1) is used by the communication unit to select the messages from the same stream which have been sent before the latest received message was sent. Based on that, the communication unit 300 will erase the previously received message only if it has been sent earlier than the latest received message.

If the user's interaction is required and the user's decision is not to retrieve the message or not to process the instruction then the message or the instruction is discarded 220.

In one embodiment, before delivering of the instruction and the message to the communication unit 300 said instruction is processed by the Multimedia Message Service Center (MMSC). As a result of executing of the action defined in the instruction, all previous messages addressed to said communication unit 300 from the same stream as the one just received are erased from a memory of the MMSC. This could be especially important in situations where the communication unit 300 is switched off for an extended period of time. For example, if a communication unit 300 is switched-off for a period of one week all the messages with an expiration date longer than one week will be accumulated in the memory of the MMSC and transmitted to the communication unit 300 when the communication unit 300 is switched on. The present invention allows for erasing all messages of a given stream except the one latest received. That would save memory storage capacity in the MMSC, but even more importantly, only the latest message would be sent to the device when it switches on. This would save bandwidth for the carrier and memory in the communication unit 300.

In another embodiment the MMS message may be used for delivering multimedia elements that can be used for modification of a Man Machine Interface (MMI). As the MMS can be used for delivering graphics, animation, music and text it is possible to use this service for personalization of the MMI of the communication unit. The Content Provider 104 creates a message 202, which is a combination of a wallpaper, a screen saver and a ring tone (so called theme) or a combination of the same elements as the theme and other elements like icons, toolbars, pointers, etc (so called skin). Such combinations can be distributed by the Content Provider 104 to the communication units.

In the next step the Context Provider 104 creates an instruction that will be processed by the communication unit 300. In this embodiment the instruction must ensure easy installation of the theme or skin on the communication unit 300. The instruction instructs the microprocessor 310 of the communication unit 300 how to render the multimedia elements of the MMS message. The stream of the message field indicates that the message contains either a theme or a skin. It means that the message contains elements of the MMI which will be affected by the action defined in the action field.

Similarly as in the embodiment of the invention applied to recurring information updates the instruction can be a part of the protocol or be embedded in the message. Similarly the authentication/authorization security measures can be applied in accordance with methods known in the art. Further, retrieval of the message and processing the instruction can be automatic or initiated by the user. As a result of processing of the instruction at least one element of the MMI is replaced with a second multimedia element which was delivered with the MMS message.

As the invention relates to wireless communication systems it is clear that the message can be delivered to the communication unit 300 over-the-air. However it is within contemplation of the invention that the message can be also delivered to the communication unit 300 by means of a wireline or wireless connection. With reference to Fig 3 one embodiment of a communication unit 300 is shown. The wireless communication unit 300 comprises a receiver section consisting of an antenna 306, a Radio Frequency switch 304 and a receiver 308 for receiving messages over-the-air. A transmitter section, for transmitting messages over-the-air, consists of the antenna 306, the Radio Frequency switch 304 and a transmitter 302. Said receiver 308 and said transmitter 302 are connected to a microprocessor 310. A communication interface 322 is also connected to said microprocessor 310. It allows for electric connection with an external device, e.g. a personal computer, and for transferring MMS messages to the communication unit. In one embodiment said communication interface is an Universal Serial Bus (USB) port. For wireless connection via the communication interface 322 a Bluetooth, WiFi or Irda technology can be used. The wireless communication unit 300 has also a scanning function 314 to detect and extract an instruction embedded in said message and to transfer said instruction to the microprocessor 310 for processing. A memory device 312 is connected to said microprocessor 310 and depending on embodiment it can be a memory module built-in in the wireless communication unit 300 and/or a removable memory device, e.g. UMTS Subscriber Information Module (USIM).

Though this invention is mainly focused on Multimedia Message Service messages and Universal Mobile Telecommunications System (UMTS) it can also be applied to other types of messages and communications systems e.g. operating in accordance with one or more of the GSM, TETRA, APC025 or GPRS communications standards.

## Claims

1. A method of remote control of a wireless communication unit (300) operating in a communications network (100) comprising:
a Content Provider (104) creating a message (202) to be delivered to said wireless communication unit (300); said Content Provider (104) creating at least one instruction (204) for said wireless communication unit (300);
delivering said message and said instruction to said wireless communication unit (300);
said wireless communication unit processing (222) said instruction.

2. The method according to claim 1, wherein said instruction is contained in at least one predefined field of a protocol used for delivering said message.

3. The method according to claim 1, wherein said instruction is embedded in said message.

4. The method according to claim 3, wherein said instruction is embedded in said message using a Multipurpose Internet Mail Extensions (MIME) method.

5. The method according to claim 3, wherein said instruction is embedded as a text in a textual portion of the message.

6. The method according to claim 2 or claim 4, or claim 5, wherein said instruction identifies a stream of the message and an action to be executed.

7. The method according to claim 6, wherein the action comprises erasing (224) from a memory of said wireless communication unit (300) previous messages from the same stream as the one just received.

8. The method according to claim 6 or claim 7, wherein the action comprises rendering (226) of said message on said wireless communication unit.

9. The method according to claim 8, wherein in said step of rendering (226) at least one element of a Man Machine Interface of said wireless communication unit (300) is replaced with a second element and said second element is delivered with said message.

10. The method according to any one of preceding claims, comprising a step of authentication and authorization (208) of the Content Provider (104).

11. The method according to any one of preceding claims, wherein retrieval (212) of the message and processing (216, 222) of the instruction is performed automatically.

12. The method according to any one of claims 1 to 10, wherein the message is retrieved automatically (212) and the instruction is processed after confirmation (216, 218, 222) by a user of said wireless communication unit (300) .

13. The method according to any one of claims 1 to 10, wherein the user is prompted to retrieve (212, 214) the message and the instruction is processed (216, 222) by said wireless communication unit automatically after said retrieval.

14. The method according to any one of claims 1 to 10, wherein the user is prompted to retrieve the message (212, 214) and the instruction is processed after confirmation (216, 218, 222) by a user of said wireless communication unit (300).

15. The method according to any one of preceding claims, wherein said message is a Multimedia Message Service (MMS) message.

16. The method according to any one of preceding claims further **characterized by** the message is delivered to said wireless communication unit (300) over-the-air.

17. The method according to any one of preceding claims further **characterized by** the message is delivered to said wireless communication unit by means of an electric connection.

18. The method according to any one of preceding claims, wherein said stream of the message identifies said Content Provider (104) and a content of said message.

19. The method according to claim 15, wherein said instruction is contained in two predefined fields of said protocol, wherein a first field indicates said stream and a second field indicates said action.

20. The method according to claim 2 or claim 19, wherein remaining fields of said protocol corresponds to fields of a protocol for delivering MMS.

21. The method according to claim 6, further **characterized by** a Multimedia Message Service Center (MMSC) processing said instruction before delivering of said message and said instruction to the wireless communication unit (300).

22. The method according to claim 22, wherein the action comprises erasing from a memory of said MMSC previous messages, addressed to said communication unit (300) from the same stream as the one just received.

23. A wireless communication unit (300) comprising a receiver section (306, 304, 308) for receiving messages over-the-air, a communication interface (322) adapted to connect to an external device and a processor (310) operably coupled to said receiver section (306, 304, 308) and to said communication interface (322) for processing said message, the wireless communication unit (300) **characterised by** a scanning function (314) to detect and extract an instruction accompanying said message and to transfer said instruction to the processor (310).

24. The wireless communication unit (300) according to claim 23, wherein said processor (310), upon processing said instruction, is adapted to erase from a memory (312) of said wireless communication unit (300) previous messages from the same stream as the one just received.

25. The wireless communication unit (300) according to claim 24, wherein said memory (312) is built-in in the wireless communication unit (300) and/or a removable memory device.

26. The wireless communication unit (300) according to claim 23 or claim 25 wherein said processor (310), upon processing of said instruction, is adapted to render said message on said wireless communication unit (310).

27. The wireless communication unit (300) according to any one of claims 23 to 26 adapted to process the instruction if the Content Provider (104) passed an authentication procedure and was authorized to transmit said instruction to said wireless communication unit (300) .

28. The wireless communication unit (300) according to any one of claims 23 to 27 adapted to retrieve automatically the message and to process the instruction after confirmation by a user of said wireless communication unit (300).

29. The wireless communication unit (300) according to any one of claims 23 to 27 adapted to prompt the user to retrieve the message and to process automatically the instruction after said retrieval.

30. The wireless communication unit (300) according to any one of claims 23 to 27 adapted to retrieve automatically the message and to process the instruction automatically after said retrieval.

31. The wireless communication unit (300) according to any one of claims 23 to 27 adapted to prompt the user to retrieve the message and to process the instruction after confirmation by a user of said wireless communication unit (300).

32. The wireless communication unit (300) according to any one of claims 23 to 31 further **characterized by** said message being received by said wireless communication unit (300) using Multimedia Message Service (MMS).

33. The wireless communication unit (300) according to any one of claims 23 to 32 further **characterized by** said communication interface 322 being adapted to connect to said external device by means of a wireline connection or a Bluetooth or a WiFi or Irda connection.

34. The wireless communication unit (300) according any one of claims 23 to 33 further adapted to forward said message with said instruction to other wireless communication unit.

35. A wireless communication network (100) comprising a wireless communication unit (300) in accordance with any one of claims 23 to 34 or adapted to operate in accordance with any one of claims 1 to 22.

36. A wireless communication network (100) according to claim 35 and said network operates in accordance with one or more of the UMTS, GSM, TETRA or APCO25, GPRS, TDMA communications standards.
